# EUROPÄISCHE PATENTANMELDUNG

(11) **EP 4 827 015 A1**
(43) Veröffentlichungstag der Anmeldung: **21.10.2026**
(21) Anmeldenummer: 26172212.8
(22) Anmeldetag: 14.04.2026
(51) Int. Cl.: H04B 10/112, G02B 26/08, H04B 10/50

(54) **VORRICHTUNG FÜR EINE OPTISCHE FREISTRAHLKOMMUNIKATION UND VERFAHREN ZUM BETREIBEN EINER VORRICHTUNG**

(30) Priorität: 16.04.2025 DE 102025114925
(71) Anmelder: Fraunhofer-Gesellschaft zur Förderung der angewandten Forschung e.V., 80686 München (DE)
(72) Erfinder: Arps, Malte, 07745 Jena (DE); Heinig, Daniel, 07745 Jena (DE); Goy, Matthias, 07745 Jena (DE); Böttner, Paul, 07745 Jena (DE)
(74) Vertreter: Epping - Hermann - Fischer

(57) **Zusammenfassung**

Es wird eine Vorrichtung (9) für eine optische Freistrahlkommunikation mit einem Sender (1) und einem Empfänger (2) angegeben, wobei
- der Sender (1) einen Laser (11) zur Emission eines Laserstrahls (15) aufweist;
- der Empfänger (2) einen Detektor (21) zur Detektion des Laserstrahls (15) aufweist;
- in einem Strahlenpfad zwischen dem Laser (11) und dem Detektor (21) ein adaptiver Reflektor (12) angeordnet ist; und
- eine Krümmung einer Spiegelfläche (40) des adaptiven Reflektors (12) im Betrieb der Vorrichtung (9) einstellbar ist.

Weiterhin wird ein Verfahren zum Betreiben einer Vorrichtung (9) angegeben.

## Beschreibung

Die vorliegende Anmeldung betrifft eine Vorrichtung für eine optische Freistrahlkommunikation und ein Verfahren zum Betreiben einer solchen Vorrichtung.

Bei der optischen Freistrahlkommunikation (Free Space Optical (FSO) Communication) ist die Divergenz des verwendeten Laserstrahls von großer Bedeutung für die Effizienz und Zuverlässigkeit der Kommunikation. Die ideale Divergenz hängt hierbei von verschiedenen Faktoren, wie beispielsweise dem Abstand zwischen Sender und Empfänger, ab und kann auch für verschiedene Phasen während der Freistrahlkommunikation unterschiedlich sein.

Eine Aufgabe ist es, die optische Freistrahlkommunikation zu verbessern.

Diese Aufgabe wird unter anderem durch eine Vorrichtung und ein Verfahren gemäß den unabhängigen Patentansprüchen gelöst. Weitere Ausgestaltungen und Zweckmäßigkeiten sind Gegenstand der abhängigen Patentansprüche.

Es wird eine Vorrichtung für eine optische Freistrahlkommunikation mit einem Sender und einem Empfänger angegeben. Die optische Übertragung kann beispielsweise durch ein Gas, wie Luft, Vakuum oder Wasser erfolgen. Der Sender und/oder der Empfänger können sich beispielsweise auf der Erdoberfläche, in einem Flugobjekt, etwa auf einem Satelliten, oder unter Wasser, etwa auf einem Unterseeboot, befinden. Beispielsweise kann eine optische Übertragung zwischen zwei Satelliten erfolgen.

Gemäß zumindest einer Ausführungsform der Vorrichtung umfasst der Sender einen Laser zur Emission eines Laserstrahls. Der Sender kann auch mehr als einen Laser aufweisen, wobei die Laser dieselbe Emissionswellenlänge oder voneinander verschiedene Emissionswellenlängen aufweisen können. Beispielsweise liegt eine Emissionswellenlänge des Lasers im nahen Infrarot (780 nm bis 3000 nm), im sichtbaren Spektralbereich oder im ultravioletten Spektralbereich.

Gemäß zumindest einer Ausführungsform der Vorrichtung weist der Empfänger einen Detektor zur Detektion des Laserstrahls auf. Der Detektor des Empfängers ist zweckmäßigerweise für Strahlung mit der Emissionswellenlänge des Lasers beziehungsweise Strahlung mit mindestens einer der Emissionswellenlängen der Laser empfindlich. Beispielsweise kann der Empfänger Teilbereiche aufweisen, die für voneinander verschiedene Detektionswellenlängenbereiche empfindlich sind.

Gemäß zumindest einer Ausführungsform der Vorrichtung ist in einem Strahlenpfad zwischen dem Laser und dem Detektor ein adaptiver Reflektor angeordnet. Der von dem Laser emittierte Laserstrahl trifft also auf eine Spiegelfläche des adaptiven Reflektors auf und wird von diesem reflektiert. Insbesondere ist eine Krümmung der Spiegelfläche des adaptiven Reflektors im Betrieb der Vorrichtung einstellbar. Zwischen dem Laser und dem adaptiven Reflektor und/oder zwischen dem adaptiven Reflektor und dem Detektor können sich weitere optische Elemente zur Strahlformung und/oder zur Strahlführung befinden.

Gemäß zumindest einer Ausführungsform der Vorrichtung ist eine Krümmung einer Spiegelfläche des adaptiven Reflektors im Betrieb der Vorrichtung einstellbar. Mittels der Krümmung ist ein Strahldurchmesser des Laserstrahls in einem vorgegebenen Abstand von dem adaptiven Reflektor einstellbar. Mit anderen Worten ist ein Divergenzwinkel des Laserstrahls nicht statisch, sondern im Betrieb der Vorrichtung einstellbar. Nach dem Auftreffen des Laserstrahls kann der Laserstrahl also stärker divergent oder weniger stark divergent sein als vor dem Auftreffen auf den adaptiven Reflektor. Der Laserstrahl kann nach dem Auftreffen auf den adaptiven Reflektor auch konvergent sein. Insbesondere ist der Strahldurchmesser des Laserstrahls im Betrieb der Vorrichtung dynamisch modulierbar, sodass sich der Strahldurchmesser des Laserstrahls während des Betriebs der Vorrichtung zumindest phasenweise mit der Zeit ändern kann.

In mindestens einer Ausführungsform der Vorrichtung für eine optische Freistrahlkommunikation weist die Vorrichtung einen Sender und einen Empfänger auf, wobei der Sender einen Laser zur Emission eines Laserstrahls aufweist. Der Empfänger weist einen Detektor zur Detektion des Laserstrahls auf. In einem Strahlenpfad zwischen dem Laser und dem Detektor ist ein adaptiver Reflektor angeordnet, wobei eine Krümmung einer Spiegelfläche des adaptiven Reflektors im Betrieb der Vorrichtung einstellbar ist. Insbesondere ist ein Strahldurchmesser des Laserstrahls im Betrieb der Vorrichtung dynamisch modulierbar. Dies kann beispielsweise während einer Kommunikationsphase oder während mehreren Kommunikationsphasen erfolgen.

Der Strahldurchmesser des Laserstrahls in einem vorgegebenen Abstand vom adaptiven Reflektor ist mittels des adaptiven Reflektors im Betrieb der Vorrichtung einstellbar.

Es hat sich gezeigt, dass ein adaptiver Reflektor besonders geeignet ist, um eine Änderung des Strahldurchmessers des Laserstrahls auf zuverlässige Weise und mit einem kompakten Aufbau zu erzielen.

Die gesamte Divergenzänderung des Laserstrahls kann ohne optische Elemente, die auf der Brechung von Licht basieren, beispielsweise Linsen, erfolgen.

Insbesondere ist hierfür keine relative Translation oder Rotation eines optischen Elements im Strahlengang erforderlich. Im Unterschied hierzu nutzen konventionelle Vorrichtungen zur Divergenzänderung beispielsweise eine Relativbewegung zwischen zwei Linsen oder eine Relativbewegung zwischen Laser und Linse. Durch den Verzicht auf derartige mechanische Bewegungen können die Zuverlässigkeit und die Kompaktheit der Vorrichtung erhöht werden.

Weiterhin ist ein adaptiver Reflektor im Hinblick auf den Strahldurchmesser des auftreffenden Laserstrahls und/oder auf die Leistung des Laserstrahls auf einfache Weise skalierbar.

Ferner kann sich die Vorrichtung durch eine hohe Strahlungsresistenz sowie eine geringe Empfindlichkeit gegenüber Temperaturveränderungen auszeichnen, sodass die Vorrichtung auch für Weltraumanwendungen besonders geeignet ist.

Gemäß zumindest einer Ausführungsform der Vorrichtung ist der adaptive Reflektor senderseitig angeordnet und zur Einstellung einer Divergenz des Laserstrahls eingerichtet. Mittels des adaptiven Reflektors ist also einstellbar, welchen Strahldurchmesser der Laserstrahl in der Ebene des Empfängers aufweist. Beispielsweise ist die Divergenz des Laserstrahls abhängig vom Abstand zwischen dem Sender und dem Empfänger und/oder abhängig von der Unsicherheit, mit der die Position des Empfängers relativ zum Sender bekannt ist, einstellbar.

Gemäß zumindest einer Ausführungsform der Vorrichtung ist der adaptive Reflektor empfängerseitig angeordnet und zur Einstellung eines Gesichtsfelds des Empfängers eingerichtet. Beispielsweise ist das Gesichtsfeld abhängig vom Abstand zwischen dem Sender und dem Empfänger und/oder abhängig von der Unsicherheit in der relativen Position zwischen Sender und Empfänger einstellbar. Durch ein vergrößertes Gesichtsfeld ist beispielsweise ein noch nicht ideal auf den Empfänger ausgerichteter Laserstrahl vereinfacht detektierbar. Andererseits kann die Empfindlichkeit des Detektors durch ein kleineres Gesichtsfeld verbessert und/oder die erforderliche optische Leistung des Lasers für eine zuverlässige Datenübertragung verringert werden.

Die Vorrichtung kann auch sowohl senderseitig als auch empfängerseitig jeweils einen solchen adaptiven Reflektor aufweisen. Alternativ kann die Vorrichtung auch nur senderseitig oder nur empfängerseitig einen adaptiven Reflektor aufweisen.

Gemäß zumindest einer Ausführungsform der Vorrichtung weist der adaptive Reflektor eine Membran auf, die über einen Aktuator verformbar ist. Die Membran bildet die Spiegelfläche des Aktuators.

Beispielsweise weist der Aktuator ein piezoelektrisches Element, einen Schrittmotor, eine Tauchspule, ein hydraulisches Element oder ein pneumatisches Element auf. Mittels piezoelektrischer Elemente können beispielsweise hohe Modulationsfrequenzen erreicht werden.

Gemäß zumindest einer Ausführungsform der Vorrichtung ist die Membran in ihrer Grundstellung plan. In diesem Zusammenhang bedeutet plan, dass sich die Divergenz des Laserstrahls beim Auftreffen auf die Membran in ihrer Grundstellung nicht oder zumindest nicht wesentlich verändert.

Gemäß zumindest einer Ausführungsform der Vorrichtung ist die Membran entlang zweier zueinander entgegengesetzter Richtungen verformbar. Von der Seite der Membran aus gesehen, auf die der Laserstrahl auftrifft, kann die Spiegelfläche der Membran konkav gekrümmt oder konvex gekrümmt sein.

Durch eine konkave Krümmung verringert sich die Divergenz des Laserstrahls. Durch eine konvexe Krümmung vergrößert sich die Divergenz des Laserstrahls nach dem Auftreffen auf den adaptiven Reflektor.

Gemäß zumindest einer Ausführungsform der Vorrichtung weist die Membran einen Grundkörper aus einem Metall auf. Beispielsweise ist der Grundkörper der Membran monolithisch aus einem Metallstück geformt, etwa durch ein materialabtragendes Verfahren, wie Fräsen, insbesondere CNC-Fräsen. Nachfolgend kann eine Ultrapräzisionsbearbeitung, beispielsweise Diamantdrehen durchgeführt werden, um eine möglichst geringe Rauheit der Oberfläche der Membran zu erzielen.

Gemäß zumindest einer Ausführungsform der Vorrichtung weist der Grundkörper eine Beschichtung zur Erhöhung der Reflektivität für die Strahlung des Lasers auf. Ein Material und/oder ein Schichtaufbau für die Beschichtung kann beispielsweise abhängig von der Emissionswellenlänge des Lasers gewählt werden.

Gemäß zumindest einer Ausführungsform der Vorrichtung weist eine erste Mode der Resonanzfrequenzen der Membran eine Frequenz von mindestens 10 kHz oder mindestens 20 kHz auf. Beispielsweise ist die Membran durch geeignete Wahl ihres Materials und/oder ihrer Geometrie für möglichst hohe Resonanzfrequenzen von mindestens 10 kHz optimierbar. Im Betrieb der Vorrichtung können so hohe Modulationsfrequenzen des adaptiven Reflektors zuverlässig erzielt werden. Eine dynamische Modulation des adaptiven Reflektors im Betrieb der Vorrichtung wird so vereinfacht.

Gemäß zumindest einer Ausführungsform der Vorrichtung ist eine Oberfläche der Membran im bestimmungsgemäßen Gebrauch im verformten Zustand so geformt, dass der Laserstrahl nach Auftreffen auf den adaptiven Reflektor in einem vorgegebenen Auftreffwinkel nur hinsichtlich seines Strahldurchmessers verändert ist. Mit anderen Worten verändert der adaptive Reflektor die Strahldivergenz, nicht jedoch die Form des Querschnitts des Laserstrahls. Beispielsweise ist die Oberfläche im verformten Zustand so geformt, dass sich für einen Laserstrahl mit einem idealen rotationssymmetrischen Gauß-förmigen Strahlprofil auch nach dem Auftreffen auf den adaptiven Reflektor keine Abweichung von der Rotationssymmetrie ergibt.

Beispielsweise beträgt der Auftreffwinkel des Laserstrahls, bezogen auf die Normale zur Spiegelfläche der Membran, zwischen einschließlich 5° und einschließlich 70°. Beispielsweise beträgt der Auftreffwinkel 45°, sodass der adaptive Reflektor eine Strahlumlenkung um insgesamt 90° bewirkt.

Gemäß zumindest einer Ausführungsform der Vorrichtung weist die Spiegelfläche der Membran im verformten Zustand die Form eines elliptischen Paraboloiden auf. In einer Schnittebene durch die Spiegelfläche, die parallel zur Spiegelfläche im nicht deformierten Zustand verläuft, ergibt sich also eine elliptische, nicht rotationssymmetrische Kontur. Durch diese elliptische Abweichung von einer kreisförmigen Kontur kann ein Astigmatismus, der bei einem von 0° verschiedenen Auftreffwinkel auf einen rotationsymmetrischen Paraboloiden auftreten würde, kompensiert werden.

Weiterhin wird ein Verfahren zum Betreiben einer Vorrichtung angegeben, wobei die Vorrichtung insbesondere wie vorstehend beschrieben ausgebildet sein kann. In Zusammenhang mit der Vorrichtung beschriebene Merkmale können daher auch für das Verfahren herangezogen werden und umgekehrt.

Gemäß zumindest einer Ausführungsform des Verfahrens wird der Strahldurchmesser des Laserstrahls im Betrieb der Vorrichtung mittels des adaptiven Reflektors eingestellt. Die Strahldivergenz des Laserstrahls ist also nicht durch die Vorrichtung statisch vorgegeben, sondern kann im Betrieb an die jeweiligen Anforderungen angepasst gewählt werden.

Gemäß zumindest einer Ausführungsform des Verfahrens wird der Strahldurchmesser zwischen aufeinanderfolgenden Kommunikationsphasen verändert. Beispielsweise kann die Strahldivergenz auf die zum jeweiligen Zeitpunkt der Kommunikation spezifischen Anforderungen hin optimiert werden.

Beispielsweise umfasst die Kommunikation die Kommunikationsphasen einer Akquisition, einer Grobausrichtung (coarsepointing), einer Feinausrichtung (finepointing), einer Nachverfolgung (tracking), und/oder einer Kommunikation zur Datenübertragung.

Gemäß zumindest einer Ausführungsform des Verfahrens wird der Strahldurchmesser des Laserstrahls mittels des adaptiven Reflektors zumindest phasenweise dynamisch moduliert. Beispielsweise kann die Modulation mit einer Frequenz von mindestens 10 Hz erfolgen. Insbesondere kann der Strahldurchmesser zumindest zeitweise während einer oder mehrerer der obigen Kommunikationsphasen dynamisch moduliert werden.

In Zusammenhang mit zumindest einem Ausführungsbeispiel des Verfahrens oder der Vorrichtung beschriebene Merkmale können mit anderen Merkmalen, die im Zusammenhang mit anderen Ausführungsbeispielen für ein Verfahren oder eine Vorrichtung offenbart sind, kombiniert werden, solange sich diese nicht gegenseitig ausschließen.

Weitere Ausgestaltungen und Zweckmäßigkeiten ergeben sich aus der nachfolgenden Beschreibung der Ausführungsbeispiele in Verbindung mit den Figuren.

Es zeigen:
Figur 1 eine schematische Darstellung einer Vorrichtung für eine optische Freistrahlkommunikation gemäß einem Ausführungsbeispiel;
Figuren 2A und 2B jeweils ein Bespiel für eine Veränderung einer Divergenz eines Laserstrahls mittels des adaptiven Reflektors;
Figur 3 ein Ausführungsbeispiel für einen adaptiven Reflektor in einer Draufsicht und in zwei Schnittansichten entlang zweier zueinander senkrechter Schnittebenen;
Figur 4 eine schematische Darstellung einer Vorrichtung für eine optische Freistrahlkommunikation gemäß einem Ausführungsbeispiel; und
Figur 5 ein Ausführungsbeispiel für ein Verfahren zum Betreiben einer Vorrichtung anhand eines schematischen Ablaufs.

Gleiche, gleichartige oder gleichwirkende Elemente sind in den Figuren mit den gleichen Bezugszeichen versehen.

Die Figuren sind jeweils schematische Darstellungen und daher nicht notwendigerweise maßstabsgetreu. Insbesondere können einzelne Elemente zum verbesserten Verständnis und/oder zur besseren Darstellbarkeit übertrieben groß dargestellt sein.

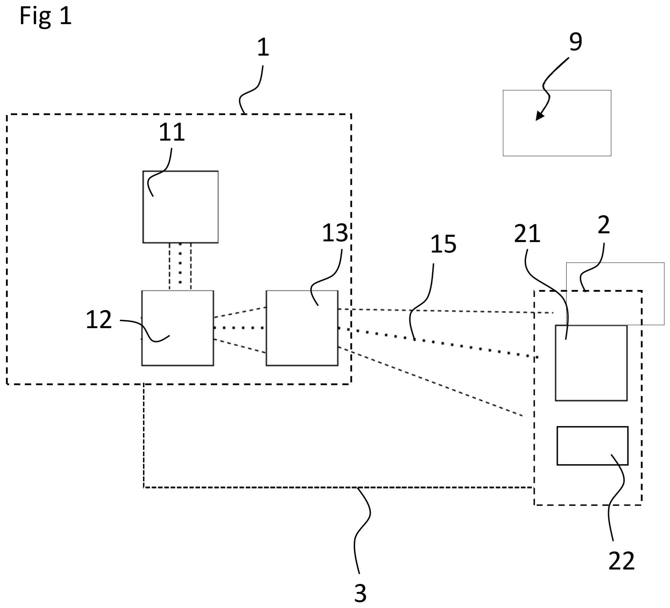

In Figur 1 ist eine Vorrichtung 9 exemplarisch dargestellt, wobei die Vorrichtung 9 einen Sender 1 und einen Empfänger 2 aufweist.

Der Sender 1 umfasst einen Laser 11 zur Emission eines Laserstrahls 15. Der Empfänger 2 weist einen Detektor 21 zur Detektion des Laserstrahls 15 auf. In einem Strahlenpfad zwischen dem Laser 11 und dem Detektor 21 ist ein adaptiver Reflektor 12 angeordnet, bei dem eine Krümmung einer Spiegelfläche 40 im Betrieb der Vorrichtung 9 einstellbar ist. Mittels des adaptiven Reflektors kann also der Durchmesser des Laserstrahls 15 nach dem Auftreffen auf den adaptiven Reflektor 12 im Betrieb der Vorrichtung eingestellt werden.

Vor dem Auftreffen auf den adaptiven Reflektor 12 weist der Laserstrahl 15 beispielsweise einen Strahldurchmesser in einem Bereich von 2 mm bis 15 mm, zum Beispiel 5 mm auf.

In dem in Figur 1 dargestellten Ausführungsbeispiel ist der adaptive Reflektor 12 senderseitig angeordnet und zur Einstellung der Divergenz des Laserstrahls 15 eingerichtet. Über den adaptiven Reflektor 12 ist also der Strahldurchmesser des Laserstrahls 15 in der Ebene des Empfängers 2 einstellbar.

Weiterhin weist der Sender 1 einen Mechanismus zur Strahllenkung 13 auf. Über diesen Mechanismus kann der Laserstrahl 15 in Richtung des Empfängers 2 gelenkt werden. Der adaptive Reflektor 12 ist im Strahlenpfad zwischen dem Laser 11 und dem Mechanismus zur Strahllenkung 13 angeordnet.

Optional können der Empfänger 2 und der Sender 1 über einen weiteren Kommunikationskanal 3 miteinander verbunden sein, etwa in Form einer Funkverbindung. Beispielsweise kann ein solcher weiterer Kommunikationskanal 3 für den Austausch von Positionsinformationen während der Akquisition zum Verbindungsaufbau genutzt werden.

Weiterhin kann der Empfänger 2 alternativ oder zusätzlich optional einen empfangsseitigen Laser 22 aufweisen. Ein solcher empfangsseitiger Laser kann beispielsweise einen Ausrichtungsstrahl emittieren, an dem sich der Sender 1 beim Verbindungsaufbau ausrichten kann.

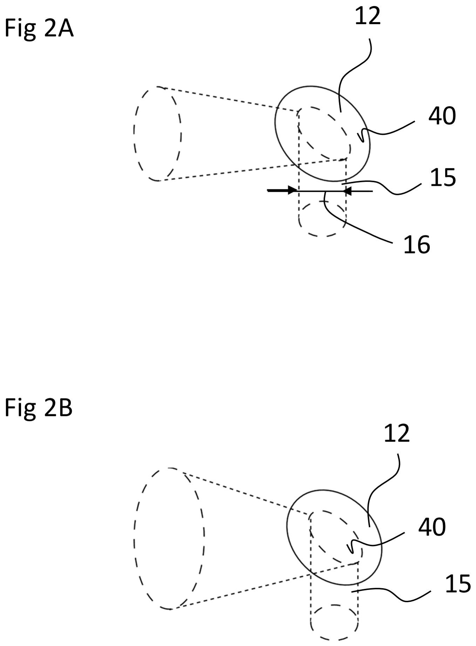

Die Wirkung des adaptiven Reflektors 12 ist in den Figuren 2A und 2B anhand von zwei Fällen schematisch dargestellt, wobei der Laserstrahl 15 beim Auftreffen auf den adaptiven Reflektor 12 in den beiden Fällen jeweils denselben Strahlquerschnitt aufweist. In beiden Fällen ist die Spiegelfläche 40 des adaptiven Reflektors 12 von der Seite gesehen, von der der Laserstrahl 15 auf den adaptiven Reflektor 12 auftrifft, konvex gekrümmt. Davon abweichend kann die Spiegelfläche 40 auch konkav gekrümmt sein.

In dem Beispiel der Figur 2A erfolgt nur eine vergleichsweise geringe Strahlaufweitung des Laserstrahls 12 mittels des adaptiven Reflektors 12. Im Unterschied hierzu ist der Laserstrahl 15 nach Auftreffen auf den adaptiven Reflektor 12 stärker divergent.

Beispielsweise beträgt eine Brechkraft der Spiegelfläche 40 im Betrieb der Vorrichtung zwischen -1 dpt und +1 dpt. Die Brechkraft ist der Kehrwert der Brennweite der Spiegelfläche.

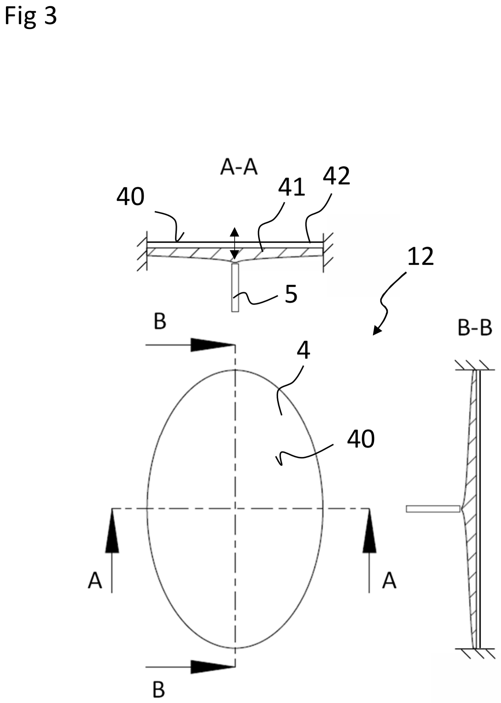

Figur 3 zeigt schematisch ein Ausführungsbeispiel für einen adaptiven Reflektor 12. In Draufsicht hat die Spiegelfläche 40 des adaptiven Reflektors 12 eine elliptische Form, wobei in Figur 3 zwei Schnittansichten entlang der kurzen Achse (Line A-A) und entlang der langen Achse (Linie B-B) der Ellipse in Schnittansicht dargestellt sind.

Die Spiegelfläche 40 ist durch eine Membran 4 gebildet.

Die Membran 4 weist einen Grundkörper 41 auf, der beispielsweise monolithisch aus einem Metallkörper hergestellt werden kann, etwa durch ein materialabtragendes Verfahren wie Fräsen. Gegebenenfalls kann in einem nachgeordneten Herstellungsschritt die Oberfläche der Membran zur Herstellung einer Spiegelfläche weiterbearbeitet werden, etwa durch eine Ultrapräzisionsbearbeitung wie Diamantdrehen.

Weiterhin kann der Grundkörper 41 mit einer Beschichtung 42 zur Erhöhung der Reflektivität versehen werden. Erforderlichenfalls kann die Beschichtung 42 auch eine Schutzschicht oder eine Mehrzahl von Schutzschichten aufweisen.

Im Betrieb der Vorrichtung 9 ist die Membran 4 über einen Aktuator 5 verformbar. In dem Beispiel der Figur 3 greift der Aktuator im Zentrum der Membran 4 an. Als Aktuator eignet sich beispielsweise ein piezoelektrisches Element, ein Schrittmotor, eine Tauchspule, ein hydraulisches Element oder ein pneumatisches Element.

Piezoelektrische Elemente eignen sich besonders für eine hochfrequente dynamische Modulierung der Divergenz des Laserstrahls 15 im Betrieb der Vorrichtung 9.

In der in Figur 3 dargestellten Grundstellung ist die Membran 4 plan. Beim Blick auf diejenige Oberfläche der Membran 4, auf die der Laserstrahl 15 auftrifft, kann die Oberfläche mittels des Aktuators 5 so verformt werden, dass sie entweder konvex gekrümmt oder konkav gekrümmt ist. Dies ist in Figur 3 in der Schnittansicht A-A anhand eines Pfeils schematisch angedeutet.

Der adaptive Reflektor 12 kann die Divergenz des Laserstrahls 15 also erhöhen, verringern oder unverändert lassen. Hierfür sind im Unterschied zu konventionellen Vorrichtungen senderseitig keine optischen Elemente wie Linsen oder Keile erforderlich, die relativ zueinander und/oder relativ zum Laser 11 bewegt werden müssen. Dadurch können eine hohe Zuverlässigkeit der Vorrichtung 9 gesteigert und ein kompakter Aufbau der Vorrichtung 9 auf einfache Weise erzielt werden.

Die Spiegelfläche 40 des adaptiven Reflektors 12 hat im verformten Zustand die Form eines elliptischen, also eines nicht rotationssymmetrischen, Paraboloiden. Insbesondere ist die Spiegelfläche 40 der Membran 4 im verformten Zustand so geformt, dass der Laserstrahl 15 nach Auftreffen auf den adaptiven Reflektor 12 in einem vorgegebenen Auftreffwinkel, beispielsweise einem Auftreffwinkel von 45° zur Normalen zur Spiegelfläche der Membran 4 eine Verringerung oder Vergrößerung der Strahldivergenz bewirkt, ohne die Form des Strahldurchmessers zu verändern. Bei einem rotationssymmetrischen Reflektor würde im Unterschied hierzu ein von 0° zur Normalen verschiedener Auftreffwinkel einen ungewünschten Astigmatismus bewirken.

In den in Figur 3 dargestellten Schnittansichten A-A sowie B-B des Ausführungsbeispiels nimmt eine Dicke der Membran 4 mit zunehmendem Abstand von ihrem Zentrum ab. Die Krafteinleitung erfolgt zentrisch über den Aktuator 5. Bei einer solchen Membran 4 mit einer tulpenförmigen Rückseite kann eine gleichmäßige Kraftverteilung der zentrisch angreifenden Kraft erreicht werden, wodurch die in ihrer Grundstellung plane Vorderseite der Membran 4 so in eine konkav oder konvex gekrümmte Oberfläche deformiert werden kann, dass die Oberfläche durch ein elliptisches Paraboloid beschreibbar ist, insbesondere in allen Auslenkungszuständen der Membran 4 im bestimmungsgemäßen Betrieb der Vorrichtung 9.

Die konkrete Form der Membran 4 kann bei der Herstellung der Membran 4 an den Auftreffwinkel des Laserstrahls im bestimmungsgemäßen Betrieb der Vorrichtung 9 angepasst werden, wobei der Auftreffwinkel in weiten Grenzen wählbar ist. Beispielsweise beträgt der Auftreffwinkel, bezogen auf eine Normale zur Spiegelfläche 40 der Membran 4 zwischen einschließlich 5° und einschließlich 70°. Bei einem Auftreffwinkel von 45° ergibt sich beispielsweise insgesamt eine Umlenkung des Laserstrahls 15 um 90°.

Weiterhin kann die Form der Membran 4 auch hinsichtlich des Strahldurchmessers des Laserstrahls 15 und/oder hinsichtlich der Laserleistung angepasst werden.

Ferner kann die Membran 4 durch geeignete Wahl der Geometrie und des Materials der Membran 4 so ausgebildet werden, dass die Resonanzfrequenzen der Membran mindestens 10 kHz oder mindestens 20 kHz betragen. Insbesondere in Kombination mit einem piezoelektrischen Aktuator können so hochdynamische Änderungen der Divergenz des Laserstrahls 15 erreicht werden.

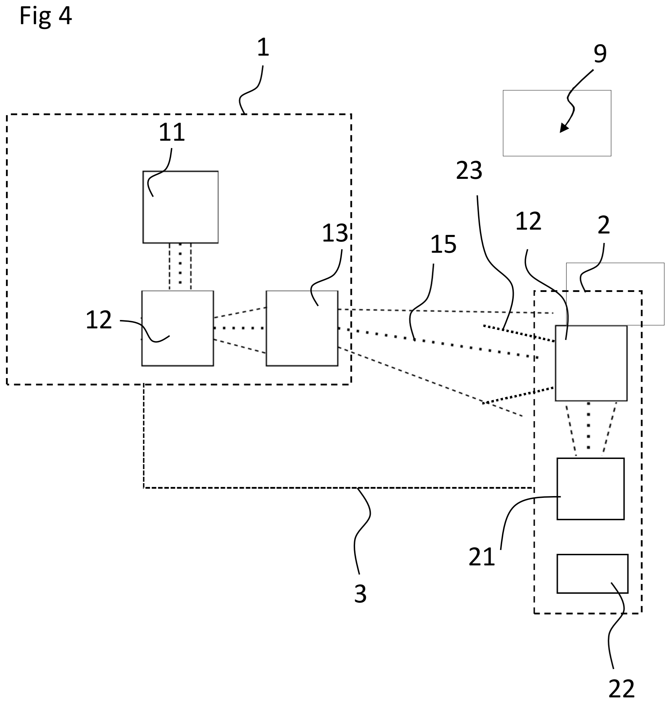

Das in Figur 4 dargestellte Ausführungsbeispiel entspricht im Wesentlichen dem in Zusammenhang mit Figur 1 beschriebenen Ausführungsbeispiel.

Insbesondere kann der adaptive Reflektor 12 wie in Zusammenhang mit Figur 3 beschrieben ausgebildet sein.

Im Unterschied zu dem in Figur 1 dargestellten Ausführungsbeispiel weist die Vorrichtung 9 empfängerseitig einen weiteren adaptiven Reflektor 12 auf. Bei dem in Figur 4 dargestellten Ausführungsbeispiel ist der empfängerseitige adaptive Reflektor zusätzlich zu dem senderseitigen adaptiven Reflektor 12 vorgesehen. Der empfängerseitige adaptive Reflektor 12 kann jedoch auch der einzige adaptive Reflektor 12 der Vorrichtung 9 sein.

Über den empfängerseitigen adaptiven Reflektor 12 ist das Gesichtsfeld 23 des Empfängers 2 im Betrieb der Vorrichtung einstellbar. Beispielsweise kann das Gesichtsfeld während eines Verbindungsaufbaus vergrößert werden, um einen noch nicht ideal auf den Empfänger 2 ausgerichteten Laserstrahl 15 vereinfacht zu detektieren.

Ein empfängerseitiger und/oder senderseitiger adaptiver Reflektor 12 im Strahlenpfad vom Laser 1 zum Detektor 21 erhöht also die Flexibilität der Vorrichtung 9.

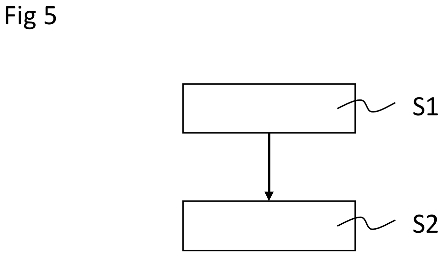

Figur 5 zeigt schematisch ein Ausführungsbeispiel für ein Verfahren zum Betreiben einer Vorrichtung 9 für die Freistrahlkommunikation.

Zum besseren Verständnis werden strukturelle Merkmale mit denselben Bezugszeichen versehen wie in den vorangegangenen Figuren 1 bis 4, auch wenn diese Bezugszeichen in Figur 5 nicht explizit gezeigt sind.

In einem Schritt S1 wird eine Vorrichtung 9 für eine Freistrahlkommunikation bereitgestellt. Insbesondere kann die Vorrichtung wie im Zusammenhang mit den Figuren 1 bis 4 beschrieben ausgebildet sein.

In einem Schritt S2 wird beim Betrieb der Vorrichtung der Strahldurchmesser des Laserstrahls 15 mittels des adaptiven Reflektors 12 eingestellt. Beispielsweise kann der Strahldurchmesser zwischen aufeinanderfolgenden Kommunikationsphasen verändert werden.

Die Divergenz des Laserstrahls ist also im Betrieb der Vorrichtung modulierbar und nicht statisch festgelegt.

Somit kann die Strahldivergenz für die einzelnen Kommunikationsphasen spezifisch angepasst werden, beispielsweise für eine Akquisition, eine Grobausrichtung, eine Feinausrichtung, eine Nachverfolgung oder für die eigentliche Kommunikation für die Datenübertragung.

Weiterhin kann der Strahldurchmesser während einer oder mehrerer dieser Kommunikationsphasen auch dynamisch moduliert werden, beispielsweise mit einer Frequenz von mindestens 10 Hz oder mindestens 50 Hz oder mindestens 100 Hz oder mindestens 1000 Hz und/oder höchstens 20 kHz oder höchstens 10 kHz.

Die vorliegende Anmeldung beansprucht die Priorität der deutschen Patentanmeldung 10 2025 114 925.9, deren gesamter Offenbarungsgehalt hiermit durch Rückbezug aufgenommen wird.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder den Ausführungsbeispielen angegeben ist.

### Bezugszeichenliste

- 1: Sender
- 11: Laser
- 12: adaptiver Reflektor
- 13: Mechanismus zur Strahllenkung
- 15: Laserstrahl
- 16: Strahldurchmesser
- 2: Empfänger
- 21: Detektor
- 22: empfängerseitiger Laser
- 23: Gesichtsfeld
- 3: weiterer Kommunikationskanal
- 4: Membran
- 40: Spiegelfläche
- 41: Grundkörper
- 42: Beschichtung
- 5: Aktuator
- 9: Vorrichtung
- S1: Schritt
- S2: Schritt

## Patentansprüche

1. Vorrichtung (9) für eine optische Freistrahlkommunikation mit einem Sender (1) und einem Empfänger (2), wobei
- der Sender (1) einen Laser (11) zur Emission eines Laserstrahls (15) aufweist;
- der Empfänger (2) einen Detektor (21) zur Detektion des Laserstrahls (15) aufweist;
- in einem Strahlenpfad zwischen dem Laser (11) und dem Detektor (21) ein adaptiver Reflektor (12) angeordnet ist; und
- eine Krümmung einer Spiegelfläche (40) des adaptiven Reflektors (12) im Betrieb der Vorrichtung (9) einstellbar ist, wobei ein Strahldurchmesser des Laserstrahls im Betrieb der Vorrichtung (9) dynamisch modulierbar ist.

2. Vorrichtung nach Anspruch 1,
wobei der adaptive Reflektor (12) senderseitig angeordnet und zur Einstellung einer Divergenz des Laserstrahls (15) eingerichtet ist.

3. Vorrichtung nach Anspruch 1 oder 2,
wobei der adaptive Reflektor (12) empfängerseitig angeordnet und zur Einstellung eines Gesichtsfelds (23) des Empfängers (2) eingerichtet ist.

4. Vorrichtung nach einem der vorherigen Ansprüche,
wobei der adaptive Reflektor (12) eine Membran (4) aufweist, die über einen Aktuator (5) verformbar ist.

5. Vorrichtung nach Anspruch 4,
wobei die Membran (4) in ihrer Grundstellung plan ist.

6. Vorrichtung nach Anspruch 4 oder 5,
wobei die Membran (4) entlang zweier zueinander entgegengesetzter Richtungen verformbar ist.

7. Vorrichtung nach einem der Ansprüche 4 bis 6,
wobei die Membran (4) einen Grundkörper (41) aus einem Metall aufweist.

8. Vorrichtung nach Anspruch 7,
wobei der Grundkörper (41) eine Beschichtung (42) zur Erhöhung der Reflektivität für die Strahlung des Lasers aufweist.

9. Vorrichtung nach einem der Ansprüche 4 bis 8,
wobei eine erste Mode der Resonanzfrequenzen der Membran (4) eine Frequenz von mindestens 10 kHz aufweist.

10. Vorrichtung nach einem der Ansprüche 4 bis 9,
wobei die Spiegelfläche (40) der Membran (4) im verformten Zustand so geformt ist, dass der Laserstrahl (15) nach Auftreffen auf den adaptiven Reflektor (12) in einem vorgegebenen Auftreffwinkel nur hinsichtlich seines Strahldurchmessers (15) verändert ist.

11. Vorrichtung nach einem der Ansprüche 4 bis 10,
wobei die Oberfläche der Membran (4) im verformten Zustand die Form eines elliptischen Paraboloiden aufweist.

12. Verfahren zum Betreiben einer Vorrichtung nach einem der vorherigen Ansprüche,
bei dem der Strahldurchmesser (16) des Laserstrahls (15) im Betrieb mittels des adaptiven Reflektors (12) eingestellt wird.

13. Verfahren nach Anspruch 12,
bei dem der Strahldurchmesser (16) zwischen aufeinander folgenden Kommunikationsphasen verändert wird.

14. Verfahren nach Anspruch 12 oder 13,
bei dem der Strahldurchmesser (16) zumindest phasenweise dynamisch moduliert wird.
